# EUROPEAN PATENT SPECIFICATION

(11) **EP 3 968 269 B1**
(45) Date of publication and mention of the grant of the patent: **14.10.2026**
(21) Application number: 20802792.0
(22) Date of filing: 26.04.2020
(51) Int. Cl.: H04N 9/73, H04N 1/60, H04N 9/11, H04N 5/253

(54) **IMAGE PROCESSING METHOD, TERMINAL AND STORAGE MEDIUM**
BILDVERARBEITUNGSVERFAHREN, ENDGERÄT UND SPEICHERMEDIUM
PROCÉDÉ DE TRAITEMENT D'IMAGE, TERMINAL ET SUPPORT D'INFORMATIONS

(30) Priority: 09.05.2019 CN 201910386977
(43) Date of publication of application: 16.03.2022
(73) Proprietor: Tencent Technology (Shenzhen) Company Limited, Shenzhen, Guangdong 518057 (CN)
(72) Inventor: WANG, Yiming, Shenzhen, Guangdong 518057 (CN)
(74) Representative: Gunzelmann, Rainer
(86) International application number: PCT/CN2020/086934
(87) International publication number: WO 2020/224459

(56) References cited:
- CN-A- 103 200 389
- CN-A- 107 613 277
- CN-A- 108 764 345
- CN-A- 110 084 767
- US-A- 6 018 589
- US-B1- 6 204 940
- US-B2- 8 654 192
- GUPTA ASHISH ET AL: "Image Enhancement Using Histogram Equalization of Saturation in HSV Color Space", vol. 5, no. 5, 5 May 2017 (2017-05-05), pages 12 - 14, XP055896235, ISSN: 2347-6982, Retrieved from the Internet <URL:http://pep.ijieee.org.in/journal_pdf/11-374-150003360112-14.pdf>

## Description

### FIELD OF THE TECHNOLOGY

This disclosure relates to the field of image processing technologies and, in particular, to an image processing method, a terminal and a storage medium.

### BACKGROUND OF THE DISCLOSURE

A film, also referred to as a photographic film, is an imaging material. Negative films are most common in films. The so-called negative film is a film that records, during imaging, colors opposite to true colors of a photographed object. Currently, methods for converting a negative film into a digital image mainly include the following two solutions. The first one is to develop a negative film by using a darkroom development technology to obtain a paper photograph, and then scan the paper photograph with a scanner to obtain a digital image. The second one is to train a neural network model by using a machine learning algorithm, and call the trained neural network model to perform color restoration on a to-be-processed negative image to obtain a digital image. The document US 6,204,940 B1 discloses a process and apparatus to improve the digital processing of scanned negative films by reducing the amount of time necessary to perform the process and by increasing the robustness and quality of the images produced. These benefits are achieved by a process of color inversion, white point and black point mapping, and midtone adjustment. White and black mapping increases the dynamic range of the image, as well as removes the color cast of the negative film. A backlit image postprocessing algorithm can be employed which uses heuristics to identify backlighted situations, which are then brightened using a nonlinear power mapping. A midtone adjustment can include the sub-steps of contrast reduction and color adjustment. Contrast reduction reverses the film exposure characteristics. Color adjustment removes the remaining color cast in the midtone region of the image, and obtains the correct brightness. Starting from images with poor contrast and color cast, the system automatically looks for the appropriate correction parameters to produce images with vivid color and good contrast. This is achieved without rescanning or retaking the picture. One implementation, using one dimensional look-up-tables, is very efficient. Further, the document GUPTA ASHISH ET AL: "Image Enhancement Using Histogram Equalization of Saturation in HSV Color Space", INTERNATIONAL JOURNAL OF INDUSTRIAL ELECTRONICS AND ELECTRICAL ENGINEERING, vol. 5, no. 5, 5 May 2017, pages 12-14, ISSN: 2347-6982 discloses a method for image enhancement using histogram equalization of saturation in HSV color space. In this paper, a new image enhancement method is established for better visual perception and improving image quality. Histogram of an image is useful in determining the contents in the image and its distribution. Histogram equalization is the technique used to improve the dynamic range of an image and help in distribution of parameter wrights over the entire domain range rather than it getting concentrated over specific regions. This paper proposes an effective approach to enhance image quality by histogram equalization without compromising on mean brightness aspect of the image. Further, the document US 6 018 589 A1 discloses that the gradation data is found from image signals for one screen, which are obtained when an image is picked up, and a histogram is made by counting all the gradation data for one screen in every gradation, with a predetermined frequency as an upper limit. Then, a reference minimum value of the image signals is calculated by detecting a point where a cumulative frequency which is counted from a small gradation of the histogram reaches a predetermined rate for total number of the gradation data, and a reference maximum value of the image signals is calculated by detecting a point where a cumulative frequency which is counted from a large gradation of the histogram reaches a predetermined rate. The image processing is carried out in accordance with the calculated reference minimum value and reference maximum value.

### SUMMARY

The invention relates to an image processing method as defined in independent claim 1.

The invention further relates to an intelligent terminal as defined in independent claim 7 and to a computer storage medium as defined in independent claim 8.

The dependent claims define advantageous embodiments.

### BRIEF DESCRIPTION OF THE DRAWINGS

For enhancing the understanding of the invention, which is defined by the independent claims, the following drawings are provided. The drawings do not define the invention and include examples, which do not fall under the scope of the invention.
FIG. 1A is a diagram of a disclosure scenario of an image processing function.
FIG. 1B is a diagram of a disclosure scenario of an image processing function.
FIG. 1C is a diagram of a disclosure scenario of an image processing function.
FIG. 1D is a schematic flowchart of image processing.
FIG. 1E is a diagram of a disclosure scenario of an image processing function.
FIG. 2A is a schematic flowchart of an image processing method according to an example, which does not fall under the scope of the claimed invention.
FIG. 2B is a schematic flowchart of an image processing method according to an example, which does not fall under the scope of the claimed invention.
FIG. 3A is a schematic diagram of a color histogram.
FIG. 3B is a schematic diagram of another color histogram.
FIG. 4A is a schematic flowchart of an image processing method.
FIG. 4B is a specific flowchart of inverting a negative image to obtain inverted image data.
FIG. 4C is a specific flowchart of step S404.
FIG. 5A is a schematic diagram of determining a first inverted component value.
FIG. 5B is a schematic diagram of determining a second inverted component value.
FIG. 6 is a schematic flowchart of an image processing method.
FIG. 7 is a schematic structural diagram of an image processing apparatus.
FIG. 8 is a schematic structural diagram of an image processing apparatus.
FIG. 9 is a schematic structural diagram of an intelligent terminal.

### DESCRIPTION OF THE DRAWINGS

In a process of converting a to-be-processed negative film into a digital image, it is found that an entire procedure of using a darkroom development technology is relatively complex, and it requires a professional technician to implement development of the negative film. In addition, for performing color restoration on the to-be-processed negative image by using a trained neural network model, a lot of negative images are needed as sample images. Because negatives are rarely produced, it is relatively difficult to collect the sample images.

This disclosure provides an image processing method. In the image processing method, a negative image may be converted into a digital image, to not only save a user time in taking a negative to an image development store and in waiting for a professional technician to develop the negative by using a darkroom development technology, but also improve convenience in converting a negative image into a digital image.

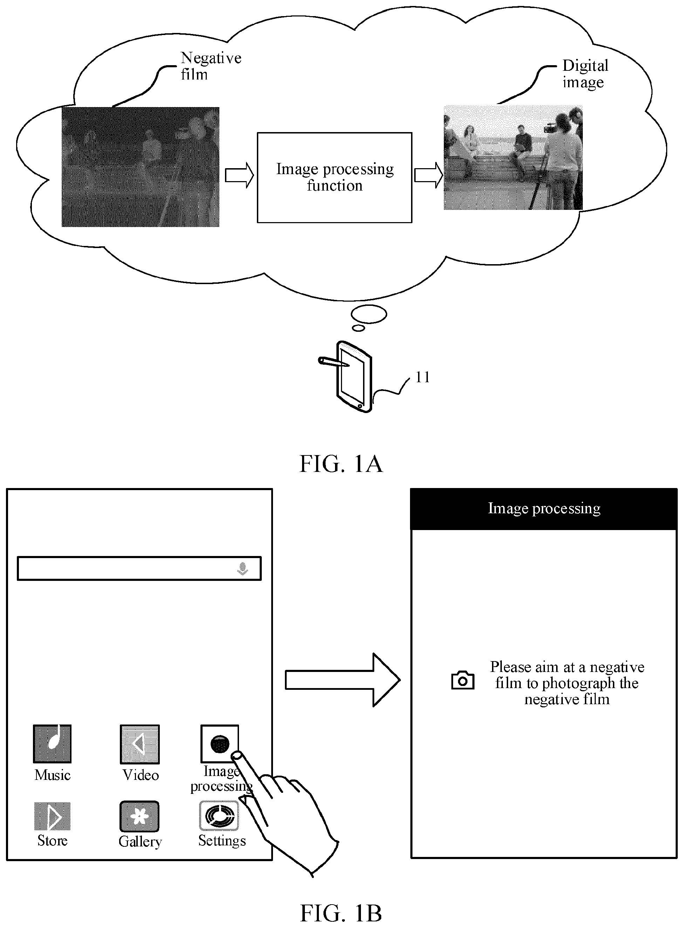

An image processing method can be performed by a terminal 11. As shown in FIG. 1A, the terminal 11 provides an image processing function for a user, to implement the here disclosed image processing method to convert a negative image into a digital image.

The terminal 11 may include, but is not limited to: a portable mobile terminal such as a smartphone, a tablet computer, or a laptop computer, a desktop computer, and the like.

In an implementation, the image processing function provided by the terminal 11 may be added as an independent functional module to any disclosure (APP) on the terminal. For example, the image processing function may be added as an independent functional module to a camera APP, so that the user can enable the image processing function in a setting interface (or a photographing interface) of the camera APP. In another example, the image processing function may be added as an independent functional module to an instant messaging APP, so that the user can enable the image processing function in a setting interface (or a session interface) of the instant messaging APP. In an implementation, the image processing function may alternatively be added as an independent system function in the terminal to a system function option bar in the terminal. That is, the user may enable the image processing function in the system function option bar in the terminal. In an implementation, the image processing function may alternatively be added as an independent APP to the terminal. That is, the user may enable the image processing function by opening the APP.

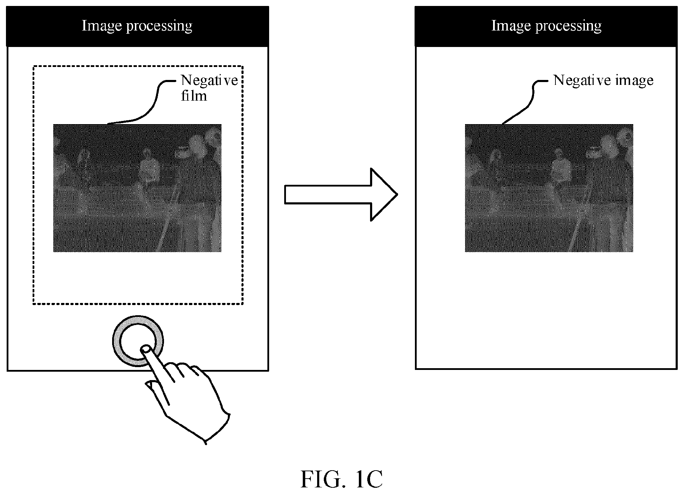

The image processing function is described below by using an example in which the image processing function is added as an independent APP to a mobile terminal. When a user wants to convert a negative film into a digital image, the user may enable the image processing function in the mobile terminal. As shown in FIG. 1B, after detecting an operation of the user for enabling the image processing function, the mobile terminal may enable and run the image processing function, and output prompt information on a user interface to prompt the user to capture an image of the negative. The user may photograph the negative film according to the prompt information. As shown in FIG. 1C, after detecting the photographing operation of the user, the mobile terminal may call a camera component of the mobile terminal to acquire an image of the negative film and use the acquired image as a negative image.

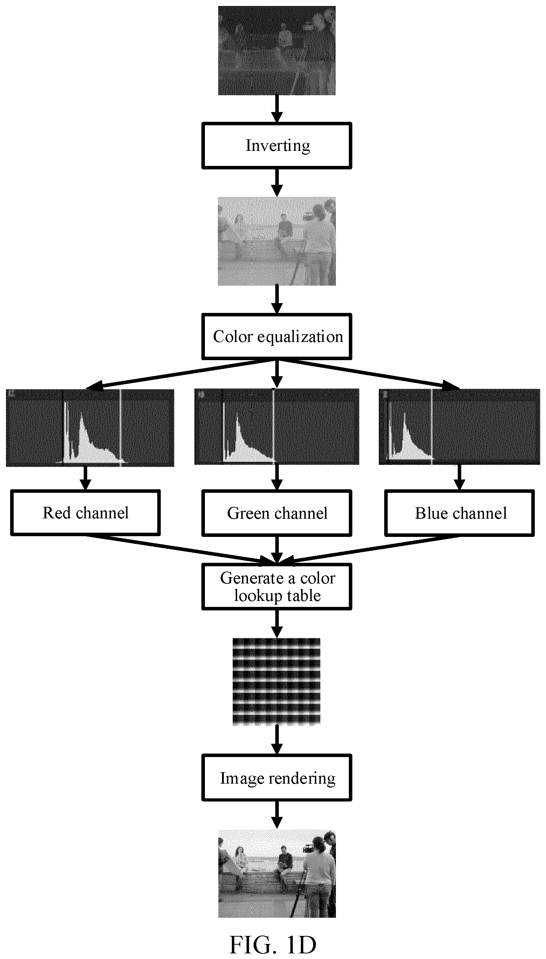

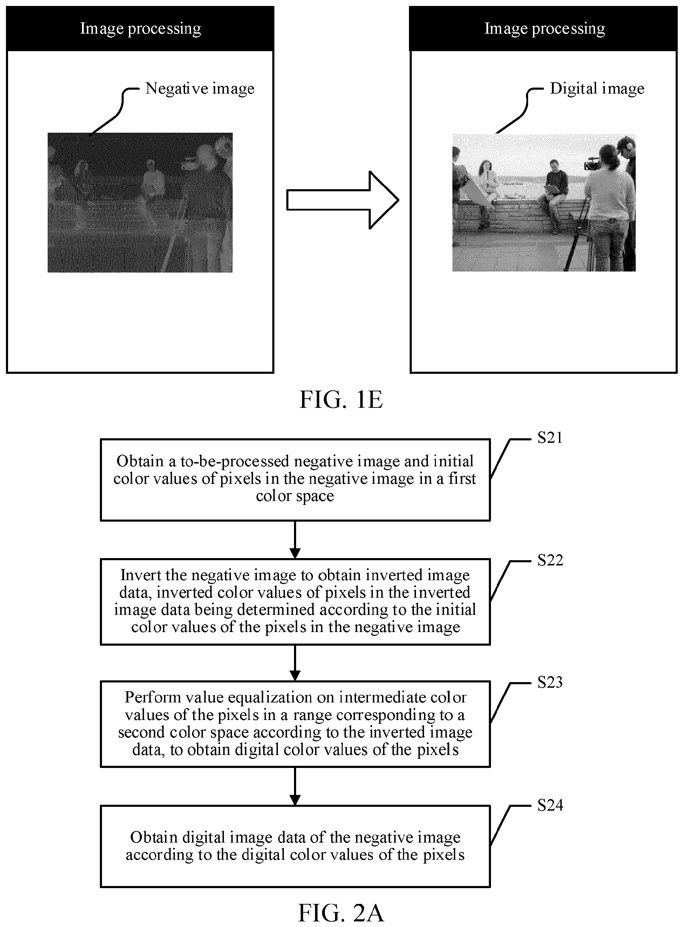

After acquiring the negative image, the mobile terminal may perform a series of image processing on the negative image to restore digital image data of the negative image, so as to convert the negative image into a digital image. Reference may also be made to FIG. 1D for a specific process of the image processing. Specifically, the mobile terminal may first invert the negative image to obtain inverted image data. The inverted image data may include inverted color values of pixels, and an inverted color value of each pixel include inverted component values of the pixel in color channels in an RGB (optical three primary colors) color space. After the inverted image data is obtained, color equalization may be performed on the inverted image data to obtain digital color values of the pixels in color channels in the RGB color space. Specifically, value equalization may be performed on color values of the pixels according to pixel distribution maps of the inverted image data in the color channels in the RGB color space, to obtain the digital color values of the pixels in the color channels in the RGB color space. Then, a color lookup table may be generated according to the digital color values of the pixels in the color channels in the RGB color space. The color lookup table includes correspondences between the inverted color values of the pixels and digital colors. Finally, image rendering may be performed based on the color lookup table to obtain the digital image corresponding to the negative image. As shown in FIG. 1E, after obtaining the digital image of the negative image, the mobile terminal may further output the digital image on the user interface for the user to view.

In view of this, the image processing function enables the user to digitalize a negative on the terminal, so that a complex process procedure of using a darkroom development technology to develop the negative can be avoided. For any negative film such as a negative preserved by parents or other elders in the past or a negative film captured by a film enthusiast at present, even a user without any experience in the darkroom development technology can convert the negative film into a digital image easily and conveniently by using the image processing function, and display, store, and spread the digitally developed image by using a terminal, thereby omitting a process of taking the negative film to an image development store and waiting for the development, so that image memory stored by the negative can be restored portably.

Based on the related descriptions of the image processing function above, FIG. 2A is a schematic flowchart of an image processing method according to an example, which does not fall under the scope of the claimed invention. The image processing method may be implemented by using the terminal mentioned above. As shown in FIG. 2A, the image processing method includes the following steps S21 to S24.

Step S21: Obtain a to-be-processed negative image and initial color values of pixels in the negative image in a first color space.

Step S22: Invert the negative image to obtain inverted image data, inverted color values of pixels in the inverted image data being determined according to the initial color values of the pixels in the negative image.

Reference may be made to steps S201 and S202 or steps S401 and S402 for specific implementations of steps S21 to S22, and detail are not described herein again.

Step S23: Perform value equalization on intermediate color values of the pixels in a range corresponding to a second color space according to the inverted image data, to obtain digital color values of the pixels.

Reference may be made to step S203 for a specific implementation of step S23, and details are not described herein again.

Step S24: Obtain digital image data of the negative image according to the digital color values of the pixels.

Reference may be made to step S204 for a specific implementation of step S24, and details are not described herein again.

Optionally, in a case that the first color space is the same as the second color space and is a target color space, the intermediate color values include the inverted color values.

Optionally, in a case that the first color space is different from the second color space, the intermediate color values include converted color values obtained by converting the inverted color values.

Optionally, the converting the inverted color values includes: converting the inverted color values of the pixels in the inverted image data from the first color space to the second color space to obtain converted color values of the pixels.

Optionally, performing value equalization on intermediate color values of the pixels in a range corresponding to a second color space to obtain digital color values of the pixels includes: performing value equalization on the converted color values of the pixels in the range corresponding to the second color space, to obtain equalized color values of the pixels; and converting the equalized color values of the pixels from the second color space to the first color space to obtain the digital color values of the pixels.

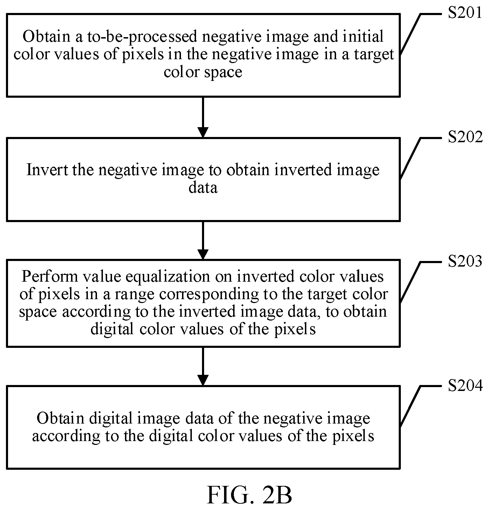

As described above, in a case that the first color space is the same as the second color space and is a target color space, the intermediate color values include the inverted color values. FIG. 2B is a schematic flowchart of an image processing method according to an example, which does not fall under the scope of the claimed invention. The image processing method may be implemented by using the terminal mentioned above. As shown in FIG. 2B, the image processing method includes the following steps S201 to S204.

Step S201: Obtain a to-be-processed negative image and initial color values of pixels in the negative image in a target color space.

Specifically, when detecting an image capture instruction from a user for a negative film, the terminal may, in response to the image capture instruction, call a camera component to photograph the negative film to obtain the to-be-processed negative image. After obtaining the negative image, the terminal may recognize pixels in the negative image to obtain initial color values of the pixels in the target color space. In an implementation, the target color space may include an RGB color space, and the initial color values may be initial RGB values. The initial color values may include initial component values of the pixels in color channels in the target color space. That is, an initial RGB value of a pixel may include an initial R value, an initial G value, and an initial B value.

Step S202: Invert the negative image to obtain inverted image data according to the initial color values of the pixels in the negative image.

Based on the above, it can be learned that, a negative film is a film that records, during imaging, colors opposite to true colors of a photographed object, and therefore, initial color values of pixels in a negative image obtained by photographing a negative film are used for reflecting colors opposite to true colors of the pixels. Therefore, after an inverted image is obtained, the negative image may be inverted to obtain inverted image data, so that inverted color values of the pixels in the inverted image data can be used for reflecting true colors of the pixels. The inverted color values may be inverted RGB values. The inverted color values of the pixels are determined according to the initial color values of the pixels in the negative image. The inverting refers to calculating complementary values of the initial color values of the pixels in the negative image and using the complementary values of the pixels as the inverted color values of the pixels. The initial color values include initial component values of the pixels in color channels in the target color space. Therefore, in a specific implementation process of step S202, the terminal may invert the initial component values of the pixels in the negative image in color channels in the target color space to obtain inverted component values of the pixels in the color channels in the target color space, and form the inverted color values of the pixels by using the inverted component values of the pixels, to obtain the inverted image data.

Step S203: Perform value equalization on inverted color values of pixels in a range corresponding to the target color space according to the inverted image data, to obtain digital color values of the pixels.

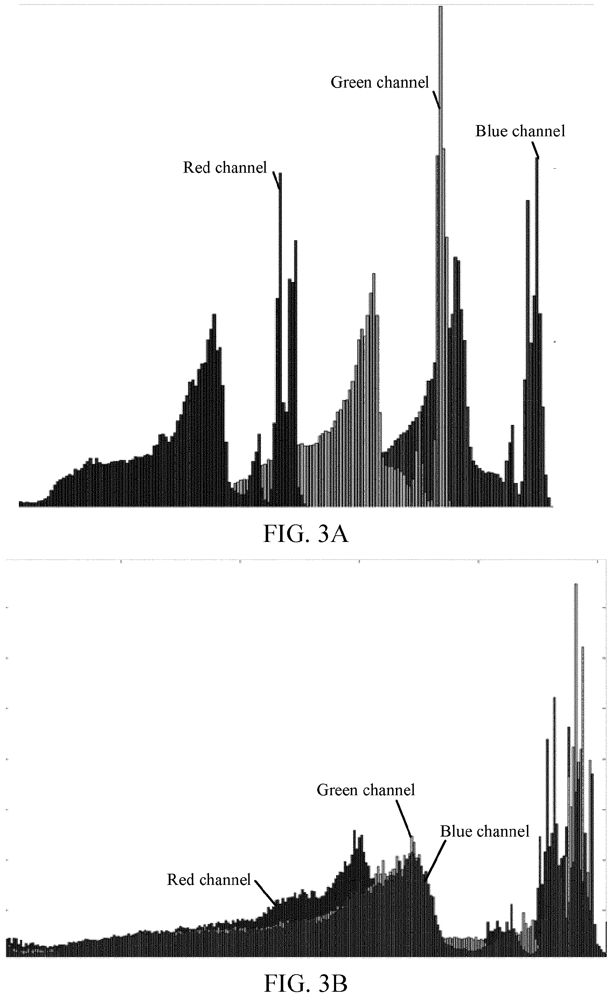

Studies have shown that, a film substrate of a negative film is generally coated with a specific chemical substance (for example, a color mask) to prevent bad light from being reflected back after light enters a photosensitive layer and reaches the film substrate. However, the chemical substance may interfere with colors. As a result, an inverted image corresponding to inverted image data obtained through inverting may have an obvious color cast phenomenon visually. According to color histogram distribution of the inverted image data in an RGB color space shown in FIG. 3A, a color cast phenomenon can be more intuitively observed. That is, color histograms corresponding to three channels, that is, an R channel (red channel), a G channel (green channel), and a B channel (blue channel) are almost staggered from each other. Therefore, to coordinate the distribution of the color histograms corresponding to the three channels, that is, the R channel, the G channel, and the B channel (as shown in FIG. 3B) to resolve the color cast problem, color equalization may be performed on an inverted image corresponding to the inverted image data.

Specifically, the terminal may perform value equalization on the inverted color values of the pixels in a range corresponding to the target color space according to the inverted image data, to obtain the digital color values of the pixels. The range corresponding to the target color space may include ranges of color channels in the target color space. A range of a color channel is a value range of color values of pixels in the color channel. For example, if the target color space is an RGB color space, a range corresponding to the target color space includes a range of the R channel, a range of the G channel, and a range of the B channel. Using the R channel as an example, a value range of color values of pixels in the R channel is 0 to 255, and therefore, the range of the R channel is [0, 255].

In an implementation, a specific implementation of step S203 may be as follows: first determining a set of local ranges formed by a maximum inverted color value and a minimum inverted color value in the inverted image data, the set of local ranges including local ranges formed by minimum inverted component values and maximum inverted component values in color channels in the target color space; then, performing value equalization on the inverted color values of the pixels in a range corresponding to the target color space according to the set of local ranges, to obtain the digital color values of the pixels. Specifically, a target local range formed by a minimum inverted component value and a maximum inverted component value in the target color channel may be obtained from the set of local ranges, and the target color channel is any channel in the target color space. A ratio of the range of the target color channel to the target local range is calculated to obtain a proportion mapping parameter. For example, if the range of the target color channel is set to [0, 255], and a value range formed by the minimum inverted component value and the maximum inverted component value in the target color channel is [5, 56], the proportion mapping parameter is: (255-0)/(56-5)=5. The inverted component values of the pixels in the target color channel are calculated by using the proportion mapping parameter, to obtain the digital component values of the pixels in the target color channel. Specifically, the inverted component values of the pixels in the target color channel may be substituted into formula 1.1 for calculation, to obtain the digital component values of the pixels in the target color channel. $F \left(x\right) = \left(x-{A}_{1}\right) \times Q$ Formula 1 where x represents an inverted component value of a target pixel in the target color channel, A₁ represents the minimum inverted component value in the target color channel, Q represents the proportion mapping parameter value, and F(x) represents a digital component value of the target pixel in the target color channel. After the digital component values of the pixels in the target color channel are obtained, digital color values of the pixels can be obtained according to the digital component values of the pixels in the target color channel.

In an implementation, the specific implementation of step S203 may alternatively be as follows: first obtaining a pixel distribution map of the inverted image data in the target color space. The pixel distribution map may include, but is not limited to, a color histogram, a color curve graph, and the like. Then, value equalization is performed on the inverted color values of the pixels in a range corresponding to the target color space according to the pixel distribution map, to obtain the digital color values of the pixels. The digital color values of the pixels may be digital RGB values.

Step S204: Obtain digital image data of the negative image according to the digital color values of the pixels.

After obtaining the digital color values of the pixels, the terminal may obtain the digital image data of the negative image according to the digital color values of the pixels in step S204. In an implementation, the terminal may directly use the digital color values of the pixels as the digital image data of the negative image, so that rendering may be subsequently performed directly according to the digital color values of the pixels, to obtain the digital image corresponding to the negative image. In an implementation, the terminal may establish a color lookup table of the inverted image data according to the digital color values of the pixels, and use the inverted image data and the color lookup table as the digital image data of the negative image, so that colors corresponding to the inverted color values of the pixels in the inverted image data can be found according to the color lookup table, to perform rendering to obtain the digital image corresponding to the negative image.

Because the negative records colors opposite to true colors, after the initial color values of the pixels in the negative image in the target color space are obtained, the negative image may be first inverted to obtain inverted image data. The inverted image data includes the inverted color values of the pixels. Then value equalization may be performed on the inverted color values of the pixels in a range corresponding to the target color space according to the inverted image data, so that the digital color values of the pixels obtained through the value equalization can more accurately reflect true colors, thereby improving the accuracy of the digital image data of the negative image obtained according to the digital color values. It can be learned from the foregoing image processing procedure that it is unnecessary to develop a negative by using a complex darkroom developing technology, and it is also unnecessary to train a model by using a large quantity of negative images, thereby reducing the complexity of image processing to some extent, and improving the feasibility of the image processing.

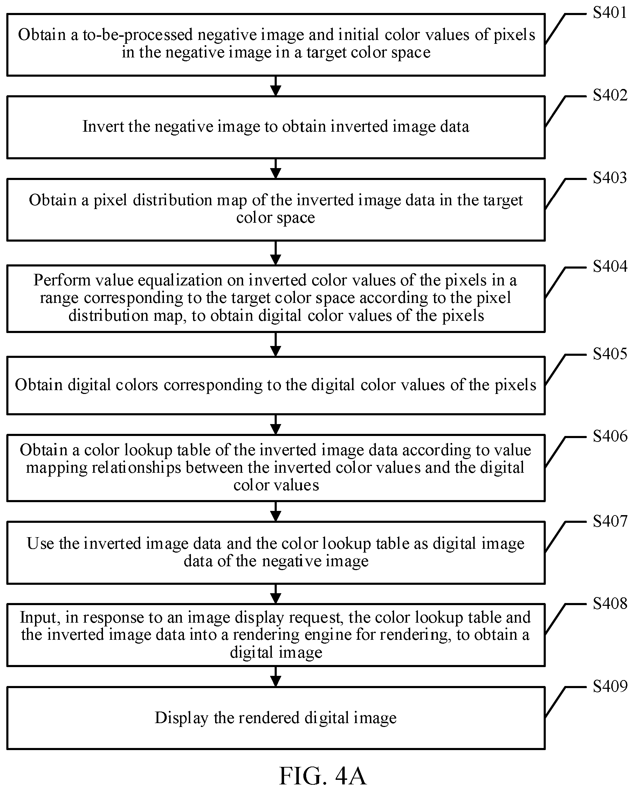

FIG. 4A is a schematic flowchart of another image processing method. The image processing method may be implemented by using the terminal mentioned above. As shown in FIG. 4A, the image processing method includes the following steps S401 to S409.

This method is described mainly by using an example in which a target color space is an RGB color space.

Step S401: Obtain a to-be-processed negative image and initial color values of pixels in the negative image in a target color space.

Step S402: Invert the negative image to obtain inverted image data, inverted color values of pixels in the inverted image data being determined according to the initial color values of the pixels in the negative image.

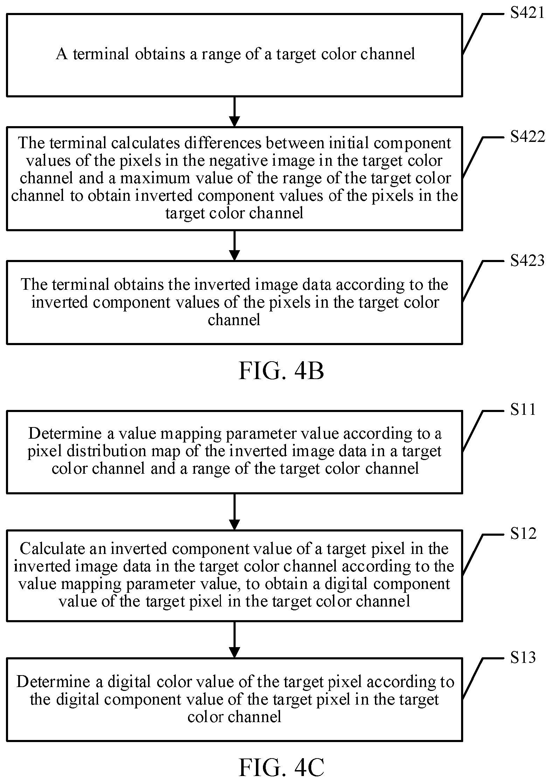

Based on the above, it can be learned that, the initial color values include initial component values of the pixels in color channels in the target color space. Correspondingly, a specific implementation of step S402 may be as shown in FIG. 4B. FIG. 4B is a specific flowchart of inverting a negative image to obtain inverted image data. As shown in FIG. 4B, the specific flowchart includes the following steps S421 to S423.

Step S421: A terminal obtains a range of a target color channel, the target color channel being any channel in the target color space.

Step S422: The terminal calculates differences between the initial component values of the pixels in the negative image in the target color channel and a maximum value of the range of the target color channel to obtain inverted component values of the pixels in the target color channel. For example, the maximum value of the range of the target color channel is 255, and then the inverted component value = 255 - initial component value.

Step S423: The terminal obtains the inverted image data according to the inverted component values of the pixels in the target color channel.

Specifically, the inverted component values of the pixels in color channels in the target color space may be calculated by using the foregoing method, so as to obtain the inverted color values of the pixels in the target color space. The inverted color values include the inverted component values of the pixels in color channels in the target color space. The inverted color values of the pixels in the target color space are added to the inverted image data.

Step S403: Obtain a pixel distribution map of the inverted image data in the target color space. The pixel distribution map includes pixel distribution maps of the inverted image data in color channels in the target color space, and the target color space includes an RGB color space.

Specifically, after the inverted image data is obtained, any color channel may be selected from the target color space as the target color channel, and the inverted component values of the pixels in the inverted image data in the target color channel is obtained. The pixels are arranged in ascending order of the inverted component values of the pixels in the target color channel, to obtain a pixel distribution map of the inverted image data in the target color channel.

Step S404: Perform value equalization on the inverted color values of the pixels in a range corresponding to the target color space according to the pixel distribution map to obtain digital color values of the pixels after the pixel distribution map of the inverted image data in the target color space is obtained.

FIG. 4C is a specific flowchart of step S404. As shown in FIG. 4C, step S404 includes the following steps S11 to S13.

S11: Determine a value mapping parameter according to a pixel distribution map of the inverted image data in a target color channel and a range of the target color channel.

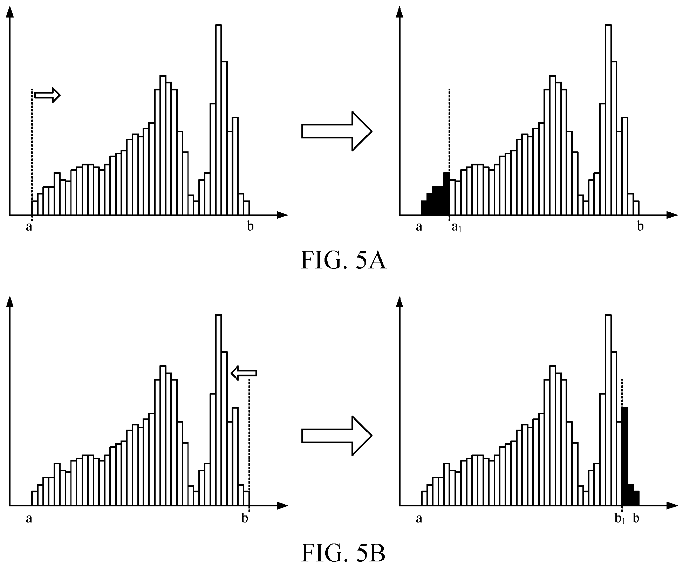

The target color channel is any one of the following channels: R channel, G channel, or B channel. The pixel distribution map in the target color channel may be a color histogram. A horizontal axis of the color histogram represents an inverted component value, and a vertical axis represents a frequency of the inverted component value (that is, a quantity of pixels corresponding to the inverted component value). In a specific implementation process, the terminal may first determine a total area of the color histogram of the inverted image data in the target color channel. Specifically, an area of each column in the color histogram may be determined by using a formula for calculating an area of a rectangle, and a sum of areas of columns is obtained as the total area of the color histogram. Alternatively, the total area of the color histogram may be obtained through an integral operation performed according to a minimum inverted component value and a maximum inverted component value of the color histogram. Second, a first inverted component value and a second inverted component value may be determined from the inverted component values of the pixels in the target color channel based on the total area. In an implementation, reference may be made to FIG. 5A for a specific implementation of determining the first inverted component value from the inverted component values of the pixels in the target color channel based on the total area. A vertical line may be set at the left side (that is, at the minimum inverted component value a) of a color histogram corresponding to the target color channel, and the vertical line is gradually slid from left to right. If a ratio of a local area to the total area meets a proportion condition, , the sliding of the vertical line is stopped, and the inverted component value corresponding to the current position of the vertical line is used as a first inverted component value a₁, the local area being determined according to an inverted component value corresponding to a current position of the vertical line and the minimum inverted component value. That is, a ratio of the local area (that is, an area of a black region shown in FIG. 5A determined by the first inverted component value and the minimum inverted component value) to the total area meets the proportion condition.

Similarly, in an implementation, reference may be made to FIG. 5B for a specific implementation of determining the second inverted component value from the inverted component values of the pixels in the target color channel based on the total area. A vertical line may be set at the right side (that is, at the maximum inverted component value b) of the color histogram corresponding to the target color channel, and the vertical line is gradually slid from right to left. If a ratio of a local area to the total area meets a proportion condition, the sliding of the vertical line is stopped, and the inverted component value corresponding to the current position of the vertical line is used as a second inverted component value b₁. The local area is determined according to an inverted component value corresponding to a current position of the vertical line and the maximum inverted component value. That is, a ratio of the local area (an area of a black region shown in FIG. 5B determined by the second inverted component value and the maximum inverted component value) to the total area meets the proportion condition. The proportion condition mentioned above may include a condition that a ratio of a local area to a total area is equal to a proportion threshold. The proportion threshold, for example, may be set to 1% according to an empirical value or a service requirement. If a ratio of an area of a column corresponding to the minimum inverted component value (that is, the first column from left to right) to the total area is greater than or equal to the proportion threshold, the minimum inverted component value may be determined as the first inverted component value. If a ratio of an area of a column corresponding to the maximum inverted component value (that is, the first column from right to left) to the total area is greater than or equal to the proportion threshold, the maximum inverted component value may be determined as the second inverted component value.

After the first inverted component value and the second inverted component value are determined, the value mapping parameter may be calculated according to a value range formed by the first inverted component value and the second inverted component value and the range of the target color channel. Specifically, the terminal may calculate a ratio of the range of the target color channel to the value range and use the calculated ratio as the value mapping parameter. For example, if the range of the target color channel is set to [0, 255], and the value range formed by the first inverted component value and the second inverted component value is [5, 92], the value mapping parameter equals: (255-0)/(92-5)=3.

S12: Calculate an inverted component value of a target pixel in the inverted image data in the target color channel according to the value mapping parameter, to obtain a digital component value of the target pixel in the target color channel.

The target pixel includes a pixel with an inverted component value not less than the first inverted component value and not greater than the second inverted component value in the target color channel. That is, the inverted component value of the target pixel is not less than the first inverted component value and not greater than the second inverted component value. In a specific implementation process, the inverted component value of the target pixel in the inverted image data in the target color channel may be calculated according to the value mapping parameter by calling a value mapping algorithm, to obtain the digital component value of the target pixel in the target color channel. The value mapping algorithm is a mapping algorithm based on an interpolation calculation. Reference may be made to formula 1.2 for a specific algorithm. $f \left(x\right) = \left(x-{a}_{1}\right) \times q + a$ Formula 1.2 where x represents the inverted component value of the target pixel in the target color channel, a₁ represents the first inverted component value, q represents the value mapping parameter, a represents a minimum value of the range of the target color channel, and f(x) represents the digital component value of the target pixel in the target color channel. Referring to an example in step S11, if the range of the target color channel is [0, 255], and the value range formed by the first inverted component value and the second inverted component value is [5, 92], then the value mapping parameter q is equal to 3. If the inverted component value of the target pixel in the target color channel is 6, the digital component value of the target pixel in the target color channel that can be calculated by using formula 1.1 is: (6 - 5) × 3 + 0 = 3.

When a first pixel with an inverted component value in the target color channel less than the first inverted component value exists, a digital component value of the first pixel in the target color channel is set to the minimum value of the range of the target color channel. When a second pixel with an inverted component value in the target color channel greater than the second inverted component value exists, a digital component value of the second pixel in the target color channel is set to the maximum value of the range of the target color channel. In the foregoing example, the range of the target color channel is [0, 255]. If an inverted component value of a pixel 1 in the target color channel is 4, less than the first inverted component value, (i.e., 5), the pixel 1 is the first pixel, and a digital component value of the pixel 1 in the target color channel may be set to 0. If an inverted component value of a pixel 2 in the target color channel is 95, greater than the second inverted component value (i.e., 92), the pixel 2 is the second pixel, and a digital component value of the pixel 2 in the target color channel may be set to 255.

S13: Determine a digital color value of the target pixel according to the digital component value of the target pixel in the target color channel.

The terminal may add the digital component value of the target pixel in the target color channel to the digital color value of the target pixel. Digital component values of the target pixel in color channels in the target color space may also be calculated through the foregoing steps S11 and S12. A digital color value of the target pixel is formed by using the digital component values of the target pixel in color channels.

Step S405: The terminal obtains digital colors corresponding to digital color values of the pixels after obtaining the digital color values of the pixels.

Step S406: Obtain a color lookup table of the inverted image data according to value mapping relationships between the inverted color values of the pixels and the digital color values, the color lookup table including correspondences between the inverted color values of the pixels in the inverted image data and the digital colors.

Specifically, the terminal may first obtain the value mapping relationships between the inverted color values of the pixels and the digital color values. A pixel corresponding to an inverted color value having a value mapping relationship with a digital color value and a pixel corresponding to the digital color value are the same pixel. Secondly, correspondences between the inverted color values of the pixels and digital colors corresponding to digital color values having a mapping relationship with the inverted color values may be determined according to the value mapping relationships between the inverted color values of the pixels and the digital color values. For example, if an inverted color value of a pixel a is (128, 128, 128), and a digital color value is (255, 255, 255), a value mapping relationship of the pixel a is (128, 128, 128) → (255, 255, 255). A digital color corresponding to (255, 255, 255) is white, and since the inverted color value of the pixel a and the white digital color have a correspondence, the correspondence is (255, 255, 255) → white.

After the correspondences between the inverted color values of the pixels and the digital colors are obtained, a color lookup table may be constructed by using the correspondences between the inverted color values of the pixels and the digital colors. The color lookup table may be presented in the form of a table or may be presented in the form of a two-dimensional image. When the color lookup table is presented in the form of a two-dimensional image, the two-dimensional image may be a lookup table (LUT). The LUT is a 512*512 image, and the LUT may include 8*8 large square grids. Each large square grid may include 64*64 small squares. R inverted component values and G inverted component values of the pixels may be stored by using 64*64 small squares. The horizontal axis of each large square grid may be represented by an R channel value, and the vertical axis may be represented by a G channel value. Alternatively, the horizontal axis of each large square grid may be represented by the G channel value, and the vertical axis may be represented by the R channel value. For ease of description, subsequently an example in which the horizontal axis is represented by the R channel value and the vertical axis is represented by the G channel value is described. A range of an R channel is [0, 255], including a total of 256 values. Therefore, a width value of each small square is 256/64=4, and a set of R channel values is [0, 4, 8, 12, 16, ..., 255]. Similarly, a height value of each small square is also 256/64=4, and a set of G channel values is also [0, 4, 8, 12, 16, ..., 255].

Different from the R channel values and the G channel values, B inverted component values may be stored by using 8*8 large squares. A range of a B channel is also [0, 255]. Therefore, each large square stores four B inverted component values. That is, B inverted component values stored by the first large square are [0, 4), B inverted component values stored by the second large square are [4, 8), and so on. The B inverted component values may be stored by using a row-major order principle or may be stored by using a column-major order principle. The row-major order principle is a principle that large squares in the same row are preferentially used to store the B inverted component values. That is, the first large square and the second large square are located in the same row. The column-major order principle is a principle that large squares in the same column are preferentially used to store the B inverted component values. That is, the first large square and the second large square are located in the same column. How to construct a color lookup table (such as an LUT) by using the correspondences between the inverted color values of the pixels and the digital colors is described in detail by using an example in which the B inverted component values are stored in the row-major order principle: If an inverted color value of a pixel b is (5, 5, 1), and a digital color value is (0, 0, 0), a correspondence between the inverted color value of the pixel b and the digital color is (5, 5, 1) → black. First, the first large square may be positioned according to a B inverted component value 1 of the pixel b. Second, a position indicated by (5, 5) in the first large square may be used as a color painting position of the pixel b, and the color painting position is painted in black.

Step S407: Use the inverted image data and the color lookup table as the digital image data of the negative image after the color lookup table is obtained.

Step S408: Input, in response to an image display request in a case that the image display request is received, the color lookup table and the inverted image data into a rendering engine for rendering, to obtain a digital image.

Specifically, a rendering engine such as GPUImageLookupFilter (a color lookup filter) may be selected randomly from GPUImage (an image rendering framework). The color lookup table and the inverted image data are inputted into the GPUImageLookupFilter for rendering, to obtain the digital image. The color lookup table and the inverted image data are inputted into the rendering engine together for rendering, so that the rendering engine may look up and render pixels concurrently, thereby improving the rendering efficiency.

Step S409: The terminal displays the rendered digital image after obtaining the digital image.

Because the negative records colors are opposite to true colors, after the initial color values of the pixels in the negative image in the target color space are obtained, the negative image may be first inverted to obtain inverted image data. The inverted image data includes the inverted color values of the pixels. Then value equalization may be performed on the inverted color values of the pixels in a range corresponding to the target color space according to the pixel distribution map of the inverted image data in the target color space, so that the digital color values of the pixels obtained through the value equalization can more accurately reflect true colors, thereby improving the accuracy of the digital image data of the negative image obtained according to the digital color values. It can be learned from the foregoing image processing procedure that it is unnecessary to develop a negative film by using a complex darkroom developing technology, and it is also unnecessary to train a model by using a large quantity of negative images, thereby reducing the complexity of image processing to some extent, and improving the feasibility of the image processing.

A more precise local color equalization method may alternatively be used for color equalization on the inverted image, so as to achieve a better equalization effect. For example, in an HSV color space, an H channel (a hue channel) may be separated, and equalization is performed only for an S channel (a saturation channel) and a V channel (a brightness channel), so that the image can have better saturation continuity and brightness continuity.

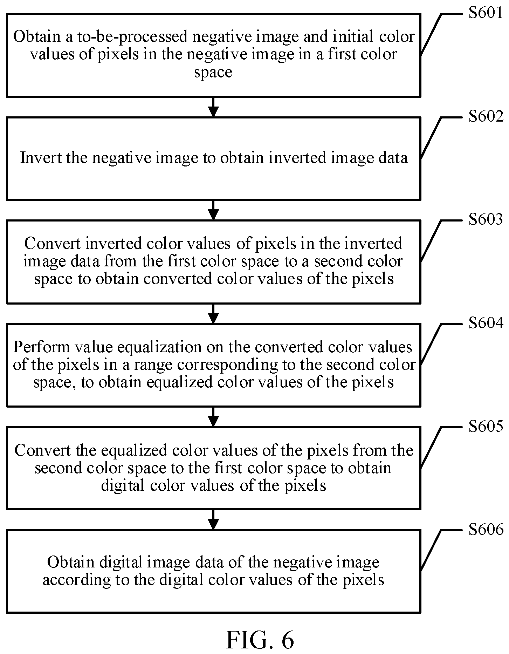

Based on the above, another image processing method is provided. The image processing method may be implemented by using the terminal mentioned above. FIG. 6 is a schematic flowchart of an image processing method. As shown in FIG. 6, the image processing method includes the following steps S601 to S606.

Step S601: Obtain a to-be-processed negative image and initial color values of pixels in the negative image in a first color space.

Step S602: Invert the negative image to obtain inverted image data, inverted color values of pixels in the inverted image data being determined according to the initial color values of the pixels in the negative image.

For specific implementations of steps S601 and S602, reference may be made to steps S201 and S202 or steps S401 and S402, and details are not described herein again.

Step S603: Convert the inverted color values of the pixels in the inverted image data from the first color space to a second color space after the inverted image data is obtained, to obtain converted color values of the pixels. The first color space is an RGB color space, and the second color space is an HSV color space.

Step S604: Perform value equalization on the converted color values of the pixels in a range corresponding to the second color space, to obtain equalized color values of the pixels. The range corresponding to the second color space may include ranges of color channels in the second color space.

In an implementation, a specific implementation of step S604 may be as follows: first determining a set of local ranges formed by a maximum converted color value and a minimum converted color value from the converted color values of the pixels, the set of local ranges including local ranges formed by minimum converted component values and maximum converted component values in the color channels in the second color space; and then, performing value equalization on the converted color values of the pixels in the range corresponding to the second color space according to the set of local ranges, to obtain the equalized color values of the pixels. Specifically, a target local range formed by a minimum converted component value and a maximum converted component value in a target color channel may be obtained from the set of local ranges, and the target color channel is an S channel or a V channel in the second color space. A ratio of a range of the target color channel to the target local range is calculated to obtain a proportion mapping parameter. The converted component values of the pixels in the target color channel are calculated by using the proportion mapping parameter, to obtain equalized component values of the pixels in the target color channel. Equalized color values of the pixels are be obtained according to the equalized component values of the pixels in the target color channel. The range of the target color channel mentioned is [0, 1]. For a specific implementation process in this implementation, reference may be made to related descriptions of step S203 and details are not described herein again.

In an implementation, the specific implementation of step S604 may also be as follows: First, a pixel distribution map of the inverted image data in the second color space is determined according to the converted color values of the pixels. Specifically, for any color channel in the second color space, converted component values of the pixels in the color channel are obtained. The pixels are arranged in ascending order of the converted component values of the pixels in the color channel to obtain a pixel distribution map of the inverted image data in the color channel. The pixel distribution map of the inverted image data in the second color space can be obtained by repeating the foregoing steps. That is, the pixel distribution map of the inverted image data in the second color space may include pixel distribution maps of the inverted image data in color channels in the second color space. Second, value equalization is performed on the inverted color values of the pixels in the range corresponding to the second color space according to the pixel distribution map, to obtain the equalized color values of the pixels. Specifically, the terminal may first determine a value mapping parameter according to a pixel distribution map of the inverted image data in a target color channel and a range of the target color channel, the target color channel being an S channel or a V channel in the second color space. The terminal then calculates a converted component value of a target pixel in the target color channel according to the value mapping parameter, to obtain an equalized component value of the target pixel in the target color channel. An equalized color value of the target pixel may be determined according to the equalized component value of the target pixel in the target color channel. The range of the target color channel mentioned is [0, 1]. For a specific implementation process in this implementation, reference may be made to related descriptions of step S203 or step S404 and details are not described herein again.

Step S605: Convert the equalized color values of the pixels from the second color space to the first color space after the equalized color values of the pixels are obtained, to obtain digital color values of the pixels.

Step S606: Obtain digital image data of the negative image according to the digital color values of the pixels.

Because the negative records colors are opposite to true colors, after the negative image is obtained, the negative image may be first inverted to obtain the inverted image data. The inverted image data includes the inverted color values of the pixels. Then inverted color values of the pixels may be converted from the first color space to the second color space to obtain converted color values of the pixels. Value equalization is performed on the converted color values of the pixels in the range corresponding to the second color space, to obtain the equalized color values of the pixels. The equalized color values of the pixels are converted from the second color space to the first color space to obtain the digital color values of the pixels. The digital color values can more accurately reflect true colors, thereby improving the accuracy of the digital image data of the negative image obtained according to the digital color values. It can be learned from the foregoing image processing procedure that it is unnecessary to develop a negative film by using a complex darkroom developing technology, and it is also unnecessary to train a model by using a large quantity of negative images, thereby reducing the complexity of image processing to some extent, and improving the feasibility of the image processing.

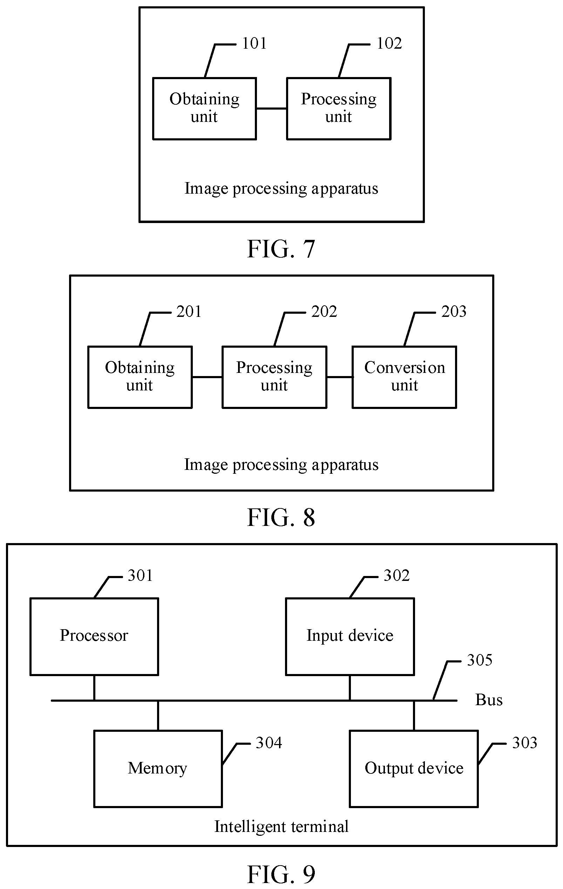

Based on the above, a schematic structural diagram of an intelligent terminal is provided in FIG. 9. As shown in FIG. 9, the intelligent terminal may include: one or more processors 301, one or more input devices 302, one or more output devices 303, and a memory 304. The processor 301, the input device 302, the output device 303, and the memory 304 are connected through a bus 305. The memory 304 is configured to store a computer program, and the computer program includes program instructions. The processor 301 is configured to execute the program instructions stored in the memory 304, to perform the image processing method shown in FIG. 2A, FIG. 2B, FIG. 4, or FIG. 6.

The processor 301 may be a central processing unit (CPU). The processor may be alternatively another general-purpose processor, that is, a microprocessor or any conventional processor. The memory 304 may include a read-only memory (ROM) and a random access memory (RAM), and provide the instructions and data to the processor 301. Therefore, the processor 301 and the memory 304 are not limited herein.

Further, a computer storage medium is provided, the computer storage medium storing computer program instructions. The processor 301 may load and execute one or more computer program instructions stored in the computer storage medium, to implement corresponding steps of the method corresponding to FIG. 2A, FIG. 2B, FIG. 4, or FIG. 6. The computer storage medium may store computer program instructions. The computer program instructions may be loaded by the processor 301 to perform the following steps:
obtaining a to-be-processed negative image and initial color values of pixels in the negative image in a first color space;
inverting the negative image to obtain inverted image data, inverted color values of pixels in the inverted image data being determined according to the initial color values of the pixels in the negative image;
performing value equalization on intermediate color values of the pixels in a range corresponding to a second color space according to the inverted image data, to obtain digital color values of the pixels; and
obtaining digital image data of the negative image according to the digital color values of the pixels.

In an implementation, the initial color values include initial component values of the pixels in color channels in the target color space. Correspondingly, when inverting the negative image to obtain the inverted image data, the first computer program instructions may be loaded by the processor 301 to specifically perform the following steps: obtaining a range of a target color channel, the target color channel being any color channel in the target color space; calculating differences between the initial component values of the pixels in the negative image in the target color channel and a maximum value of the range of the target color channel to obtain inverted component values of the pixels in the target color channel; and obtaining the inverted image data according to the inverted component values of the pixels in the target color channel.

In an implementation, when performing value equalization on the inverted color values of the pixels in a range corresponding to the target color space according to the inverted image data, to obtain the digital color values of the pixels, the first computer program instructions may be loaded by the processor 301 to specifically perform the following steps: obtaining a pixel distribution map of the inverted image data in the target color space; and performing value equalization on the inverted color values of the pixels in a range corresponding to the target color space according to the pixel distribution map, to obtain the digital color values of the pixels.

In an implementation, the pixel distribution map includes pixel distribution maps of the inverted image data in color channels in the target color space, and the target color space includes an RGB color space. Correspondingly, when performing value equalization on the inverted color values of the pixels in a range corresponding to the target color space according to the pixel distribution map, to obtain the digital color values of the pixels, the first computer program instructions may be loaded by the processor 301 to specifically perform the following steps: determining a value mapping parameter according to a pixel distribution map of the inverted image data in a target color channel and a range of the target color channel, the target color channel being any one of the following channels: an R channel, a G channel, or a B channel; calculating an inverted component value of a target pixel in the inverted image data in the target color channel according to the value mapping parameter, to obtain a digital component value of the target pixel in the target color channel; and determining a digital color value of the target pixel according to the digital component value of the target pixel in the target color channel.

In an implementation, the pixel distribution map is a color histogram. Correspondingly, when determining the value mapping parameter according to the pixel distribution map of the inverted image data in the target color channel and the range of the target color channel, the first computer program instructions may be loaded by the processor 301 to specifically perform the following steps: determining a total area of the color histogram of the inverted image data in the target color channel; determining a first inverted component value and a second inverted component value from the inverted component values of the pixels in the target color channel based on the total area, a ratio of a local area determined according to the first inverted component value and a minimum inverted component value to the total area meeting a proportion condition, and a ratio of a local area determined according to the second inverted component value and a maximum inverted component value to the total area meeting the proportion condition; and calculating the value mapping parameter according to a value range formed by the first inverted component value and the second inverted component value and the range of the target color channel.

In an implementation, an inverted component value of the target pixel is not less than the first inverted component value and is not greater than the second inverted component value. Correspondingly, when performing value equalization on the inverted color values of the pixels in a range corresponding to the target color space according to the pixel distribution map, to obtain the digital color values of the pixels, the first computer program instructions may be further loaded by the processor 301 to perform the following steps: setting, in a case that a first pixel with an inverted component value in the target color channel less than the first inverted component value exists, a digital component value of the first pixel in the target color channel to a minimum value of the range of the target color channel; and setting, in a case that a second pixel with an inverted component value in the target color channel greater than the second inverted component value exists, a digital component value of the second pixel in the target color channel to a maximum value of the range of the target color channel.

In an implementation, when obtaining the digital image data of the negative image according to the digital color values of the pixels, the first computer program instructions may be further loaded by the processor 301 to specifically perform the following steps: obtaining digital colors corresponding to the digital color values of the pixels; obtaining a color lookup table of the inverted image data according to value mapping relationships between the inverted color values of the pixels and the digital color values, the color lookup table including correspondences between the inverted color values of the pixels in the inverted image data and the digital colors; and using the inverted image data and the color lookup table as the digital image data of the negative image.

In an implementation, the first computer program instructions may be further loaded by the processor 301 to perform the following steps: inputting, in response to an image display request, the color lookup table and the inverted image data into a rendering engine for rendering, to obtain a digital image; and displaying the rendered digital image.

In an implementation, the first color space is an RGB color space, and the second color space is an HSV color space.

In an implementation, when performing value equalization on the converted color values of the pixels in the range corresponding to the second color space to obtain the equalized color values of the pixels, the first computer program instructions may be loaded by the processor 301 to specifically perform the following steps: determining a pixel distribution map of the inverted image data in the second color space according to the converted color values of the pixels; and performing value equalization on the converted color values of the pixels in the range corresponding to the second color space according to the pixel distribution map, to obtain the equalized color values of the pixels.

In an implementation, the pixel distribution map includes pixel distribution maps of the inverted image data in color channels in the second color space, and the second color space is an HSV color space. Correspondingly, when performing value equalization on the converted color values of the pixels in the range corresponding to the second color space according to the pixel distribution map, to obtain the equalized color values of the pixels, the first computer program instructions may be loaded by the processor 301 to specifically perform the following steps: determining a value mapping parameter according to a pixel distribution map of the inverted image data in a target color channel and a range of the target color channel, the target color channel being an S channel or a V channel in the second color space; calculating a converted component value of a target pixel in the target color channel according to the value mapping parameter, to obtain an equalized component value of the target pixel in the target color channel; and determining an equalized color value of the target pixel according to the equalized component value of the target pixel in the target color channel.

Because the negative records colors opposite to true colors, after the initial color values of the pixels in the negative image in the target color space are obtained, the negative image may be first inverted to obtain inverted image data. The inverted image data includes the inverted color values of the pixels. Then value equalization may be performed on the inverted color values of the pixels in a range corresponding to the target color space according to the inverted image data, so that the digital color values of the pixels obtained through the value equalization can more accurately reflect true colors, thereby improving the accuracy of the digital image data of the negative image obtained according to the digital color values. It can be learned from the foregoing image processing procedure that it is unnecessary to develop a negative by using a complex darkroom developing technology, and it is also unnecessary to train a model by using a large quantity of negative images, thereby reducing the complexity of image processing to some extent, and improving the feasibility of the image processing.

For a specific working process of the terminal and units described above, reference may be made to the related descriptions and details are not described herein again.

A person of ordinary skill in the art may understand that all or some of procedures of the foregoing described method may be implemented by a computer program instructing relevant hardware. The program may be stored in a computer-readable storage medium. When the program is executed, the procedures of the foregoing described method may be implemented. The storage medium may be a magnetic disc, an optical disc, a read-only memory, a random access memory, or the like.

## Claims

1. An image processing method, performed by a terminal, the method comprising:
calling, in response to the image capture instruction, a camera component of the terminal to photograph a to-be-processed negative image to obtain (S401) the negative image, wherein each pixel of the negative image comprises initial color values in an RGB color space;
inverting (S402) the negative image to determine an inverted image based on the initial color values, wherein each pixel of the inverted image comprises inverted color values in the RGB color space and wherein the inverted image is determined by:
obtaining (S421) a range of a color channel of the RGB color space,
calculating (S422), for each pixel and for each color channel of the negative image, a difference between a maximum value of the range of the color channel and the initial color value corresponding to the color channel to obtain an inverted color value, and
determining (S423) the inverted image according to the inverted color values;
obtaining (S403), for each color channel of the inverted image, a pixel distribution map;
performing (S404), for each pixel and for each color channel of the inverted image, a value equalization on the inverted color value to obtain an equalized color value, wherein the equalized color values are obtained by:
determining (S11), for each color channel of the inverted image, a value mapping parameter based on a value range in the corresponding pixel distribution map and the range of the color channel, and
calculating (S12), for each pixel and for each color channel of the inverted image, an equalized color value based on the value mapping parameter;
obtaining (S405) digital colors corresponding to the equalized color values of the plurality of pixels;
obtaining (S406) a color lookup table of the inverted image according to value mapping relationships between the inverted color values and the equalized color values, the color lookup table comprising correspondences between the inverted color values and the equalized colors;
using (S407) the inverted image and the color lookup table as digital image data of the negative image;
inputting (S408), in response to an image display request, the color lookup table and the inverted image into a rendering engine to obtain a rendered digital image; and
displaying (S409) the rendered digital image.

2. The method according to claim 1, wherein the pixel distribution map comprises a color histogram, and wherein determining (S11), for each color channel of the inverted image, the value mapping parameter based on the value range in the corresponding pixel distribution map and the range of the color channel comprises:
determining a total area of the color histogram of the inverted image in the color channel;
determining a first inverted color value and a second inverted color value from the inverted color values based on the total area,
wherein a ratio of a first local area determined according to the first inverted color value and a minimum inverted color value to the total area meets a proportion condition, and
wherein a ratio of a second local area determined according to the second inverted color value and a maximum inverted color value to the total area meets the proportion condition; and
calculating the value mapping parameter according to the value range defined by the first inverted color value and the second inverted color value, and the range of the color channel.

3. The method according to claim 2, wherein the inverted color value of the pixel is not less than the first inverted color value and is not greater than the second inverted color value; and
wherein performing (S404), for each pixel and for each color channel of the inverted image, the value equalization on the inverted color value further comprises:
setting, when a first pixel with an inverted color value is less than the first inverted color value, an equalized color value of the first pixel to a minimum value of the range of the color channel; and
setting, when a second pixel with an inverted color value in the color channel is greater than the second inverted color value, an equalized color value of the second pixel to a maximum value of the range of the color channel.

4. The method according to claim 1, wherein, before obtaining (S403), for each color channel of the inverted image, a pixel distribution map, the method further comprises: converting (S603), for each pixel of the inverted image, the inverted color values in the RGB color space into a second color space to obtain converted color values.

5. The method according to claim 4, wherein the step of performing (S604) the value equalization is performed, for each pixel and for each color channel of the converted image, on the converted color values in a range corresponding to the second color space, to obtain equalized converted color values; and
wherein, after performing (S604) the value equalization, the method further comprises:
converting (S605) the equalized converted color values from the second color space to the RGB color space to obtain the equalized color values.

6. The method according to claim 5, wherein the second color space is an HSV color space.

7. An intelligent terminal comprising a processor, an input device, an output device, and a memory, the processor, the input device, the output device, and the memory being connected to each other, the memory being configured to store a computer program, the computer program comprising program instructions, and the processor being configured to execute the program instructions to perform the image processing method according to any one of claims 1 to 6.

8. A computer storage medium storing a computer program comprising computer program instructions adapted to perform all the steps of any one of claims 1 to 6, when said computer program is executed on a computer.

## Patentansprüche

1. Ein Bildverarbeitungsverfahren, das von einem Endgerät durchgeführt wird, wobei das Verfahren umfasst:
Aufrufen, als Reaktion auf die Bilderfassungsanweisung, einer Kamerakomponente des Endgeräts, um ein zu verarbeitendes Negativbild zu fotografieren, um (S401) das Negativbild zu erhalten, wobei jedes Pixel des Negativbildes anfängliche Farbwerte in einem RGB-Farbraum umfasst;
Invertieren (S402) des Negativbildes, um basierend auf den anfänglichen Farbwerten ein invertiertes Bild zu bestimmen, wobei jedes Pixel des invertierten Bildes invertierte Farbwerte in dem RGB-Farbraum umfasst und wobei das invertierte Bild bestimmt wird durch:
Erhalten (S421) eines Bereichs eines Farbkanals des RGB-Farbraums,
Berechnen (S422), für jedes Pixel und für jeden Farbkanal des Negativbildes, einer Differenz zwischen einem Maximalwert des Bereichs des Farbkanals und dem dem Farbkanal entsprechenden anfänglichen Farbwert, um einen invertierten Farbwert zu erhalten, und
Bestimmen (S423) des invertierten Bildes gemäß den invertierten Farbwerten;
Erhalten (S403), für jeden Farbkanal des invertierten Bildes, einer Pixelverteilungskarte;
Durchführen (S404), für jedes Pixel und für jeden Farbkanal des invertierten Bildes, einer Wertegalisierung an dem invertierten Farbwert, um einen egalisierten Farbwert zu erhalten, wobei die egalisierten Farbwerte erhalten werden durch:
Bestimmen (S11), für jeden Farbkanal des invertierten Bildes, eines Wertabbildungsparameters basierend auf einem Wertebereich in der entsprechenden Pixelverteilungskarte und dem Bereich des Farbkanals, und
Berechnen (S12), für jedes Pixel und für jeden Farbkanal des invertierten Bildes, eines egalisierten Farbwerts basierend auf dem Wertabbildungsparameter;
Erhalten (S405) digitaler Farben, die den egalisierten Farbwerten der Vielzahl von Pixeln entsprechen;
Erhalten (S406) einer Farbnachschlagetabelle des invertierten Bildes gemäß Wertabbildungsbeziehungen zwischen den invertierten Farbwerten und den egalisierten Farbwerten, wobei die Farbnachschlagetabelle Entsprechungen zwischen den invertierten Farbwerten und den egalisierten Farben umfasst;
Verwenden (S407) des invertierten Bildes und der Farbnachschlagetabelle als digitale Bilddaten des Negativbildes;
Eingeben (S408), als Reaktion auf eine Bildanzeigeanforderung, der Farbnachschlagetabelle und des invertierten Bildes in eine Rendering-Engine, um ein gerendertes digitales Bild zu erhalten; und
Anzeigen (S409) des gerenderten digitalen Bildes.

2. Das Verfahren nach Anspruch 1, wobei die Pixelverteilungskarte ein Farbhistogramm umfasst und wobei das Bestimmen (S11), für jeden Farbkanal des invertierten Bildes, des Wertabbildungsparameters basierend auf dem Wertebereich in der entsprechenden Pixelverteilungskarte und dem Bereich des Farbkanals umfasst:
Bestimmen einer Gesamtfläche des Farbhistogramms des invertierten Bildes in dem Farbkanal;
Bestimmen eines ersten invertierten Farbwerts und eines zweiten invertierten Farbwerts aus den invertierten Farbwerten basierend auf der Gesamtfläche,
wobei ein Verhältnis einer ersten lokalen Fläche, die gemäß dem ersten invertierten Farbwert und einem minimalen invertierten Farbwert bestimmt wird, zu der Gesamtfläche eine Anteilsbedingung erfüllt, und
wobei ein Verhältnis einer zweiten lokalen Fläche, die gemäß dem zweiten invertierten Farbwert und einem maximalen invertierten Farbwert bestimmt wird, zu der Gesamtfläche die Anteilsbedingung erfüllt; und
Berechnen des Wertabbildungsparameters gemäß dem Wertebereich, der durch den ersten invertierten Farbwert und den zweiten invertierten Farbwert definiert ist, und dem Bereich des Farbkanals.

3. Das Verfahren nach Anspruch 2, wobei der invertierte Farbwert des Pixels nicht kleiner als der erste invertierte Farbwert und nicht größer als der zweite invertierte Farbwert ist; und
wobei das Durchführen (S404), für jedes Pixel und für jeden Farbkanal des invertierten Bildes, der Wertegalisierung an dem invertierten Farbwert ferner umfasst:
Einstellen, wenn ein erstes Pixel mit einem invertierten Farbwert kleiner als der erste invertierte Farbwert ist, eines egalisierten Farbwerts des ersten Pixels auf einen Minimalwert des Bereichs des Farbkanals; und
Einstellen, wenn ein zweites Pixel mit einem invertierten Farbwert in dem Farbkanal größer als der zweite invertierte Farbwert ist, eines egalisierten Farbwerts des zweiten Pixels auf einen Maximalwert des Bereichs des Farbkanals.

4. Das Verfahren nach Anspruch 1, wobei das Verfahren vor dem Erhalten (S403), für jeden Farbkanal des invertierten Bildes, einer Pixelverteilungskarte ferner umfasst: Konvertieren (S603), für jedes Pixel des invertierten Bildes, der invertierten Farbwerte in dem RGB-Farbraum in einen zweiten Farbraum, um konvertierte Farbwerte zu erhalten.

5. Das Verfahren nach Anspruch 4, wobei der Schritt des Durchführens (S604) der Wertegalisierung für jedes Pixel und für jeden Farbkanal des konvertierten Bildes an den konvertierten Farbwerten in einem dem zweiten Farbraum entsprechenden Bereich durchgeführt wird, um egalisierte konvertierte Farbwerte zu erhalten; und
wobei das Verfahren nach dem Durchführen (S604) der Wertegalisierung ferner umfasst:
Konvertieren (S605) der egalisierten konvertierten Farbwerte aus dem zweiten Farbraum in den RGB-Farbraum, um die egalisierten Farbwerte zu erhalten.

6. Das Verfahren nach Anspruch 5, wobei der zweite Farbraum ein HSV-Farbraum ist.

7. Ein intelligentes Endgerät, umfassend einen Prozessor, eine Eingabevorrichtung, eine Ausgabevorrichtung und einen Speicher, wobei der Prozessor, die Eingabevorrichtung, die Ausgabevorrichtung und der Speicher miteinander verbunden sind, wobei der Speicher dazu konfiguriert ist, ein Computerprogramm zu speichern, wobei das Computerprogramm Programmanweisungen umfasst, und wobei der Prozessor dazu konfiguriert ist, die Programmanweisungen auszuführen, um das Bildverarbeitungsverfahren nach einem der Ansprüche 1 bis 6 durchzuführen.

8. Ein Computerspeichermedium, das ein Computerprogramm speichert, das Computerprogrammanweisungen umfasst, die dazu ausgelegt sind, alle Schritte eines der Ansprüche 1 bis 6 durchzuführen, wenn das genannte Computerprogramm auf einem Computer ausgeführt wird.

## Revendications

1. Un procédé de traitement d'image, mis en œuvre par un terminal, le procédé comprenant :
l'appel, en réponse à l'instruction de capture d'image, d'un composant de caméra du terminal pour photographier une image négative à traiter afin d'obtenir (S401) l'image négative, dans lequel chaque pixel de l'image négative comprend des valeurs de couleur initiales dans un espace colorimétrique RGB ;
l'inversion (S402) de l'image négative pour déterminer une image inversée sur la base des valeurs de couleur initiales, dans lequel chaque pixel de l'image inversée comprend des valeurs de couleur inversées dans l'espace colorimétrique RGB et dans lequel l'image inversée est déterminée par :
l'obtention (S421) d'une plage d'un canal de couleur de l'espace colorimétrique RGB,
le calcul (S422), pour chaque pixel et pour chaque canal de couleur de l'image négative, d'une différence entre une valeur maximale de la plage du canal de couleur et la valeur de couleur initiale correspondant au canal de couleur afin d'obtenir une valeur de couleur inversée, et
la détermination (S423) de l'image inversée selon les valeurs de couleur inversées ;
l'obtention (S403), pour chaque canal de couleur de l'image inversée, d'une carte de distribution de pixels ;
la réalisation (S404), pour chaque pixel et pour chaque canal de couleur de l'image inversée, d'une égalisation de valeur sur la valeur de couleur inversée afin d'obtenir une valeur de couleur égalisée, dans lequel les valeurs de couleur égalisées sont obtenues par :
la détermination (S11), pour chaque canal de couleur de l'image inversée, d'un paramètre de mappage de valeurs sur la base d'une plage de valeurs dans la carte de distribution de pixels correspondante et de la plage du canal de couleur, et
le calcul (S12), pour chaque pixel et pour chaque canal de couleur de l'image inversée, d'une valeur de couleur égalisée sur la base du paramètre de mappage de valeurs ;
l'obtention (S405) de couleurs numériques correspondant aux valeurs de couleur égalisées de la pluralité de pixels ;
l'obtention (S406) d'une table de consultation de couleurs de l'image inversée selon des relations de mappage de valeurs entre les valeurs de couleur inversées et les valeurs de couleur égalisées, la table de consultation de couleurs comprenant des correspondances entre les valeurs de couleur inversées et les couleurs égalisées ;
l'utilisation (S407) de l'image inversée et de la table de consultation de couleurs comme données d'image numériques de l'image négative ;
l'introduction (S408), en réponse à une demande d'affichage d'image, de la table de consultation de couleurs et de l'image inversée dans un moteur de rendu afin d'obtenir une image numérique rendue ; et
l'affichage (S409) de l'image numérique rendue.

2. Le procédé selon la revendication 1, dans lequel la carte de distribution de pixels comprend un histogramme de couleurs, et dans lequel la détermination (S11), pour chaque canal de couleur de l'image inversée, du paramètre de mappage de valeurs sur la base de la plage de valeurs dans la carte de distribution de pixels correspondante et de la plage du canal de couleur comprend :
la détermination d'une aire totale de l'histogramme de couleurs de l'image inversée dans le canal de couleur ;
la détermination d'une première valeur de couleur inversée et d'une seconde valeur de couleur inversée parmi les valeurs de couleur inversées sur la base de l'aire totale,
dans lequel un rapport, à l'aire totale, d'une première aire locale déterminée selon la première valeur de couleur inversée et une valeur de couleur inversée minimale satisfait à une condition de proportion, et
dans lequel un rapport, à l'aire totale, d'une seconde aire locale déterminée selon la seconde valeur de couleur inversée et une valeur de couleur inversée maximale satisfait à la condition de proportion ; et
le calcul du paramètre de mappage de valeurs selon la plage de valeurs définie par la première valeur de couleur inversée et la seconde valeur de couleur inversée, et la plage du canal de couleur.

3. Le procédé selon la revendication 2, dans lequel la valeur de couleur inversée du pixel n'est pas inférieure à la première valeur de couleur inversée et n'est pas supérieure à la seconde valeur de couleur inversée ; et
dans lequel la réalisation (S404), pour chaque pixel et pour chaque canal de couleur de l'image inversée, de l'égalisation de valeur sur la valeur de couleur inversée comprend en outre :
le réglage, lorsqu'un premier pixel ayant une valeur de couleur inversée est inférieur à la première valeur de couleur inversée, d'une valeur de couleur égalisée du premier pixel à une valeur minimale de la plage du canal de couleur ; et
le réglage, lorsqu'un second pixel ayant une valeur de couleur inversée dans le canal de couleur est supérieur à la seconde valeur de couleur inversée, d'une valeur de couleur égalisée du second pixel à une valeur maximale de la plage du canal de couleur.

4. Le procédé selon la revendication 1, dans lequel, avant l'obtention (S403), pour chaque canal de couleur de l'image inversée, d'une carte de distribution de pixels, le procédé comprend en outre : la conversion (S603), pour chaque pixel de l'image inversée, des valeurs de couleur inversées dans l'espace colorimétrique RGB en un second espace colorimétrique afin d'obtenir des valeurs de couleur converties.

5. Le procédé selon la revendication 4, dans lequel l'étape de réalisation (S604) de l'égalisation de valeur est réalisée, pour chaque pixel et pour chaque canal de couleur de l'image convertie, sur les valeurs de couleur converties dans une plage correspondant au second espace colorimétrique, afin d'obtenir des valeurs de couleur converties égalisées ; et
dans lequel, après la réalisation (S604) de l'égalisation de valeur, le procédé comprend en outre :
la conversion (S605) des valeurs de couleur converties égalisées du second espace colorimétrique en l'espace colorimétrique RGB afin d'obtenir les valeurs de couleur égalisées.

6. Le procédé selon la revendication 5, dans lequel le second espace colorimétrique est un espace colorimétrique HSV.

7. Un terminal intelligent comprenant un processeur, un dispositif d'entrée, un dispositif de sortie et une mémoire, le processeur, le dispositif d'entrée, le dispositif de sortie et la mémoire étant reliés les uns aux autres, la mémoire étant configurée pour stocker un programme informatique, le programme informatique comprenant des instructions de programme, et le processeur étant configuré pour exécuter les instructions de programme afin de mettre en œuvre le procédé de traitement d'image selon l'une quelconque des revendications 1 à 6.

8. Un support de stockage informatique stockant un programme informatique comprenant des instructions de programme informatique adaptées pour réaliser toutes les étapes de l'une quelconque des revendications 1 à 6, lorsque ledit programme informatique est exécuté sur un ordinateur.
